# FASCICULE DE BREVET EUROPEEN

(11) **EP 2 100 042 B1**
(45) Date de publication et mention de la délivrance du brevet: **31.05.2017**
(21) Numéro de dépôt: 07858667.4
(22) Date de dépôt: 06.11.2007
(51) Int. Cl.: F04D 13/06, F03B 3/10

(54) **APPAREIL HYDROELECTRIQUE REVERSIBLE**
UMBAUBARE HYDROELEKTRISCHE VORRICHTUNG
REVERSIBLE HYDROELECTRIC DEVICE

(30) Priorité: 10.11.2006 FR 0609818
(43) Date de publication de la demande: 16.09.2009
(73) Titulaire: Paoli, Joseph, 20200 Bastia (Corse) (FR)
(72) Inventeur: Paoli, Joseph, 20200 Bastia (Corse) (FR)
(74) Mandataire: Dossmann, Gérard
(86) Numéro de dépôt international: PCT/FR2007/052305
(87) Numéro de publication internationale: WO 2008/056083

(56) Documents cités:
- US-A- 2 962 599
- US-A- 3 614 268
- US-A- 4 275 989

## Description

La présente invention concerne le domaine des installations hydroélectriques.

On connaît depuis longtemps d'une part des installations hydroélectriques qui constituent des groupes de production d'énergie électrique sous l'effet de chutes d'eau et d'autre part des installations hydroélectriques qui constituent des groupes de pompage d'eau sous l'effet de moteurs électriques.

Par ailleurs, des installations hydroélectriques mixtes sont proposées dans les documents de brevets US-A-2 962 599 et US-A-3 614 268 ci-dessous.

Le document US-A-2 962 599 décrit une installation hydraulique permettant de faire passer de l'eau d'un réservoir haut vers un réservoir bas et réciproquement. Cette installation comprend une canalisation principale qui présente deux parties dont l'une est reliée au réservoir haut et dont l'autre est reliée au réservoir bas et entre lesquelles sont prévus, via deux déflecteurs de dérivation, deux conduits montés en parallèle et reliés l'un avec l'autre par un conduit secondaire. Sur ce conduit secondaire est installé un organe hydraulique relié en rotation à un organe électrique.

Dans une première position de fermeture des déflecteurs, l'eau peut passer du réservoir haut vers le réservoir bas en traversant l'organe hydraulique dans un sens, cet organe hydraulique constituant une turbine d'entraînement de l'organe électrique qui constitue une génératrice électrique. Cette première position des déflecteurs est adoptée lorsqu'il y a des besoins en énergie électrique sur un réseau électrique, par exemple en période de forte demande des utilisateurs.

Dans une seconde position de fermeture des déflecteurs, l'eau peut passer du réservoir bas vers le réservoir haut en traversant l'organe hydraulique dans le même sens que précédemment, cet organe hydraulique constituant alors une pompe actionnée par l'organe électrique qui constitue alors un moteur électrique. Cette seconde position des déflecteurs est adoptée lorsque le réseau électrique peut être fournisseur d'énergie électrique, par exemple en période de faible demande des utilisateurs.

Lorsque les déflecteurs sont en position ouverte, l'eau passe directement du réservoir haut vers le réservoir bas au travers des conduits parallèles, sans traverser l'organe hydraulique. Cette position ouverte des déflecteurs peut être adoptée pour des raisons de déversement.

Le document US-A-3 614 268 décrit une installation hydraulique qui comprend, installé sur une canalisation unique de liaison directe d'un réservoir haut et d'un réservoir bas, un organe hydraulique relié à un organe électrique. Dans le sens de circulation de l'eau du réservoir haut vers le réservoir bas, l'organe hydraulique constitue une turbine d'entraînement de l'organe électrique synchrone qui constitue une génératrice synchrone. Dans l'autre sens de circulation de l'eau du réservoir bas vers le réservoir haut, l'organe hydraulique constitue une pompe entraînée par l'organe électrique qui constitue un moteur synchrone. Un circuit électrique permet de maintenir une vitesse constante de rotation de l'arbre commun de l'organe hydraulique et de l'organe électrique, en mode turbine en agissant sur une vanne et en mode pompe en agissant sur la fréquence d'un onduleur.

Un objet de la présente invention peut être de proposer un appareil hydroélectrique susceptible d'être installé sur une canalisation, par exemple d'un réseau hydraulique d'eau brute ou potable, dans laquelle l'eau peut être amenée à circuler dans un sens ou dans l'autre dans cette canalisation, en fonction en particulier d'impératifs liés au réseau hydraulique.

Un autre objet de la présente invention peut être de proposer un appareil hydroélectrique susceptible d'adapter, et en conséquence de faire varier, de maintenir, de réduire ou au contraire d'augmenter, les conditions de pression et/ou de débit dans une canalisation à circulation d'eau dans un sens ou dans l'autre d'un réseau hydraulique afin d'optimiser le fonctionnement de ce réseau hydraulique.

Un autre objet de la présente invention peut être de proposer un appareil hydroélectrique susceptible de consommer de l'énergie électrique ou d'en produire, en fonction en particulier d'impératifs liés à un réseau hydraulique.

L'appareil hydroélectrique réversible selon l'invention, pouvant s'installer sur une canalisation extérieure, peut comprendre : un groupe hydraulique comprenant une machine hydraulique constituée par une pompe centrifuge réversible en turbine et un circuit hydraulique présentant des conduites de dérivation et/ou de liaison et des vannes motorisées permettant une circulation de l'eau dans ladite machine hydraulique dans un sens ou dans l'autre quel que soit le sens de circulation de l'eau dans ladite canalisation extérieure ; une machine électrique accouplée à ladite machine hydraulique et constituée par un moteur asynchrone réversible en génératrice asynchrone ; et un système électronique comprenant un automate de réglage et/ou de régulation desdites vannes et un variateur électronique de réglage et/ou de régulation de la vitesse de rotation de ladite machine électrique pour que la pression et/ou le débit en aval de la machine hydraulique en fonction du sens de circulation soient stabilisés ou ajustés à au moins une valeur de consigne.

Selon l'invention, ledit circuit hydraulique peut être symétrique par rapport à la machine hydraulique.

Selon l'invention, le corps de ladite machine hydraulique peut comprendre des conduites symétriques.

Selon l'invention, le système électronique peut comprendre un variateur électronique quatre quadrants montés entre un réseau électrique et ladite machine électrique et assurant, en fonctionnement en moteur asynchrone, le réglage et/ou la régulation de la vitesse de rotation de ladite machine électrique, et, en fonctionnement en génératrice asynchrone, une adaptation électrique au réseau électrique.

Selon l'invention, le variateur électronique peut comprendre deux lignes en parallèle comprenant respectivement un redresseur et un onduleur, montés tête-bêche sur ces lignes, et un commutateur adapté pour relier la machine électrique et le réseau électrique soit par l'une desdites lignes soit par l'autre.

Selon l'invention, le système électronique peut comprendre des capteurs de pression et/ou de débit placés de part et d'autre de la machine hydraulique et reliés audit automate.

Selon l'invention, le système électronique peut comprendre des capteurs du sens et/ou de la vitesse de rotation et/ou du couple de la machine hydraulique reliés audit automate,

Selon l'invention, le système électronique peut comprendre des capteurs de la tension et/ou du courant et/ou de la fréquence et/ou thermiques de la machine électrique.

Selon l'invention, le circuit hydraulique peut comprendre deux conduites de dérivation en parallèle insérées entre deux parties de ladite canalisation extérieure et au moins une conduite de liaison dont les extrémités sont reliées auxdites conduites de dérivation, et ladite machine hydraulique peut être installée sur cette conduite de liaison et ainsi que quatre vannes motorisées installées respectivement sur les branches desdites conduites de dérivation formées de part et d'autre des extrémités de ladite conduite de liaison.

Selon l'invention, plusieurs conduites de liaison en parallèle sur lesquelles sont respectivement installées des machines hydrauliques reliées à des machines électriques peuvent être prévues.

Selon l'invention, plusieurs machines hydrauliques en série sur la conduite de liaison peuvent être prévues, ces machines hydrauliques étant reliées à plusieurs machines électriques ou à une machine électrique par une transmission.

La présente invention, dans ses différents aspects, sera mieux comprise à l'étude d'un appareil hydroélectrique et de ses modes de fonctionnement, décrits à titre d'exemples non limitatifs et illustrés par le dessin sur lequel :
- La figure 1 représente une vue extérieure en perspective d'un appareil selon l'invention ;
- La figure 2 représente un schéma d'un groupe hydraulique selon l'invention ;
- Les figures 3 à 8 représentent les différents modes de circulation de l'eau dans ledit groupe hydraulique ;
- La figure 9 représente un tableau récapitulatif des modes de fonctionnement des vannes dudit groupe hydraulique ;
- Et la figure 10 représente un schéma d'un système électrique et électronique de l'appareil.

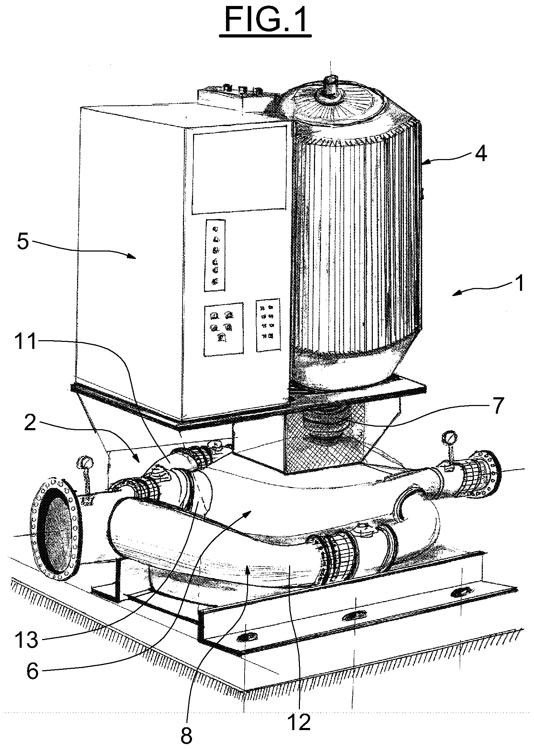

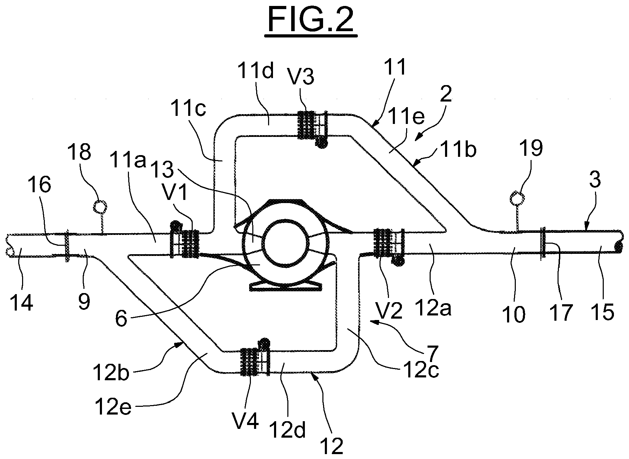

En se reportant aux figures 1 et 2, on peut voir qu'on a représenté un appareil hydroélectrique 1 qui comprend un groupe hydraulique 2 installé sur une canalisation 3, extérieure à l'appareil, d'un réseau hydraulique, une machine électrique 4 et un système électrique et électronique 5.

Le groupe hydraulique 2 comprend une machine hydraulique 6 reliée à la machine électrique 4 par un arbre 7 et un circuit hydraulique 8.

Ce circuit hydraulique 8 comprend, entre deux conduites d'extrémité opposées 9 et 10, deux conduites de dérivation 11 et 12 montées en parallèle et une conduite de liaison 13 dont les extrémités sont reliées auxdites conduites de dérivation et sur laquelle est installée la machine hydraulique 6.

Les extrémités des conduites opposées 9 et 10 sont reliées à deux parties opposées 14 et 15 d'une canalisation extérieure 3 par l'intermédiaire de brides 16 et 17

Le groupe hydraulique 2 comprend en outre quatre vannes motorisées V1, V2. V3 et V4, installées respectivement sur les branches des conduites de dérivation 11 et 12 formées de part et d'autre des extrémités de la conduite de liaison 13.

Selon la disposition représentée sur les figures, les parties 14 et 15 de la canalisation extérieure 3 sont alignées ; les conduites d'extrémité opposées 9 et 10, les portions 11a et 12a des conduites de dérivation 11 et 12, adjacentes aux conduites d'extrémité opposées 9 et 10 et munies des vannes V1 et V2, et la conduite de liaison 13 sont alignées avec les parties 14 et 15 de la canalisation extérieure 3 ; tandis que les autres portions 11b et 12b des conduites de dérivation 11 et 12, munies des vannes motorisées V3 et V4, s'étendent en formant des U.

Le groupe hydraulique 2 est en outre muni, à ses extrémités, de capteurs de pression 18 et 19 installés sur les conduites d'extrémité opposées 9 et 10, délivrant des signaux correspondant à des pressions P18 et P19.

Avantageusement, la machine hydraulique 6 peut être constituée par une pompe centrifuge réversible en turbine et la machine électrique 4 peut être constituée par un moteur asynchrone réversible en génératrice asynchrone.

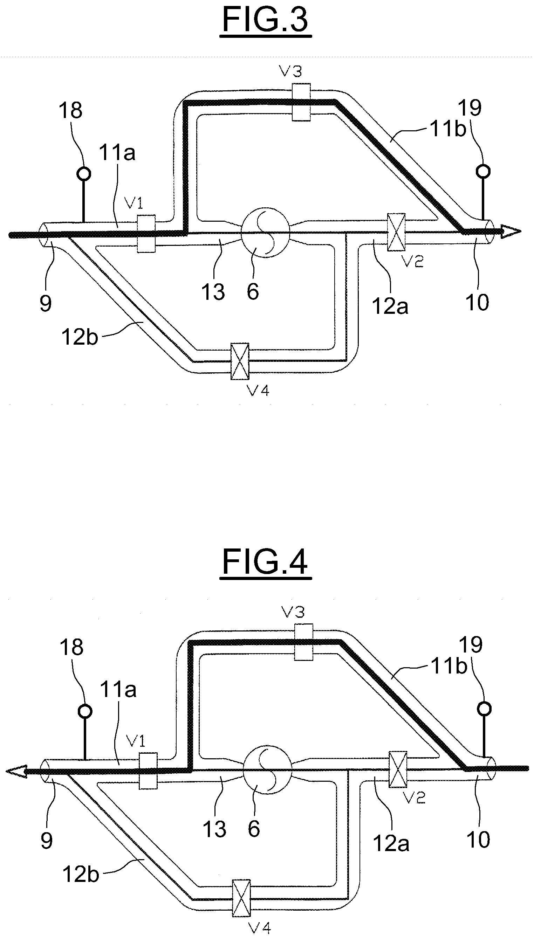

En se reportant aux figures 3 à 8 on va maintenant décrire les différents modes de l'appareil 1 en fonction des différents états de vannes motorisées V1, V2, V3 et V4.

Sur toutes les figures, il sera considéré que la partie 14 de la canalisation extérieure accouplée à la conduite d'extrémité 9 est à gauche et que la partie 15 de la canalisation extérieure accouplée à la conduite d'extrémité 10 est à droite.

Il sera également considéré que, quand l'eau circule de gauche à droite dans la conduite de liaison 13, dans un sens référencé S1, la machine hydraulique agit à titre de pompe, entraînée par la machine électrique 4 agissant à titre de moteur électrique, tandis que, quand l'eau circule de droite à gauche dans la conduite de liaison 13, dans l'autre sens référencé S2, la machine hydraulique agit à titre de turbine, entraînant la machine électrique 4 agissant à titre de génératrice électrique.

Il sera également considéré que, quand l'eau circule dans la canalisation extérieure 3 de la gauche vers la droite, l'eau circule dans un sens référencé SC1 tel qu'elle passe de la partie 14 de cette canalisation, vers sa partie 15 et que, quand l'eau circule dans la canalisation extérieure 3 de la droite vers la gauche, l'eau circule dans un sens référencé SC2 tel qu'elle passe de la partie 15 de cette canalisation, vers sa partie 14.

### Etat I.

Comme le montrent les figures 3 et 4, lorsque les vannes V1 et V3 sont ouvertes et que les vannes V2 et V4 sont fermées, l'eau pouvant circuler dans un sens ou dans l'autre dans la canalisation extérieure 3, circule au travers du circuit hydraulique 8, dans un sens ou dans l'autre, en passant par la conduite de dérivation 11, la conduite de dérivation 12 étant fermée. Ainsi, l'eau ne peut pas passer par la conduite de liaison 13 et donc ne traverse pas la machine hydraulique 6.

A ce mode de circulation est associé un mode de fonctionnement en by-pass tel que la machine hydraulique 6 et en conséquence la machine électrique 4 ne tournent pas. Les pressions P18 et P 19 détectées par les capteurs 18 et 19 sont approximativement égales.

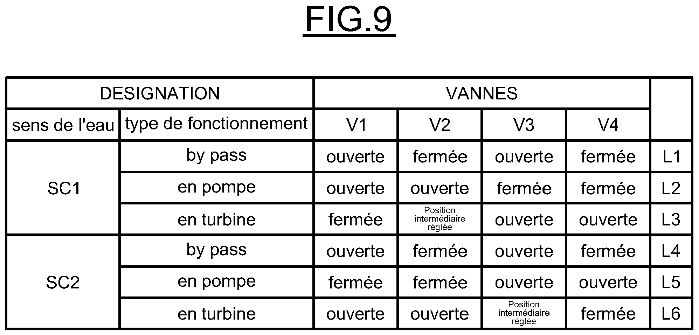

Le cas ci-dessus est illustré sur la ligne L1 pour le sens SC1 et sur la ligne L4 pour le sens SC2 du tableau de la figure 9.

Un mode de fonctionnement équivalent est également atteint lorsque, de façon symétrique, les vannes V1 et V3 sont fermées et que les vannes V2 et V4 sont ouvertes et qu'en conséquence, l'eau traverse alors la conduite 12.

### Etat II.

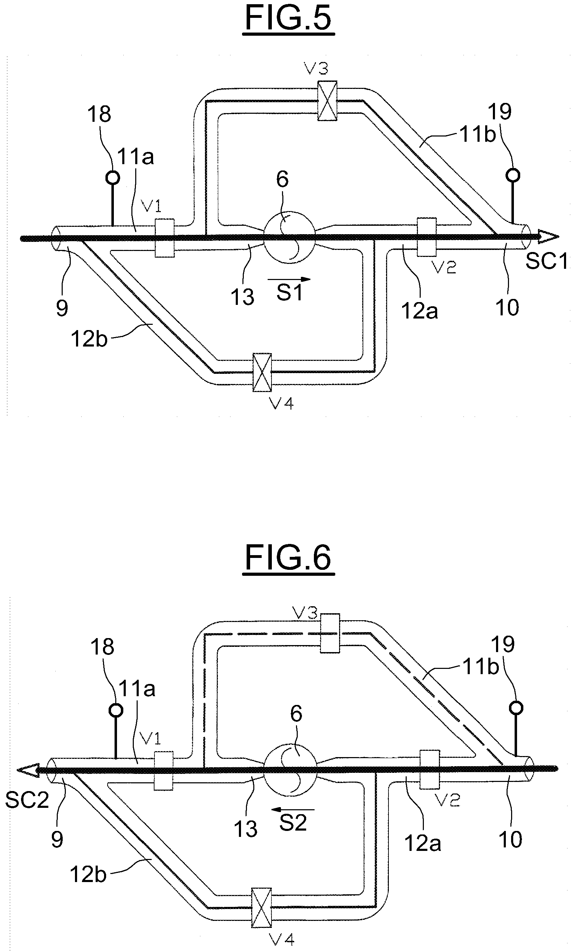

Comme le montrent les figures 5 et 6, lorsque les vannes V1 et V2 sont ouvertes et que les vannes V3 et V4 sont fermées, l'eau pouvant circuler dans un sens ou dans l'autre dans la canalisation extérieure 3, circule au travers du circuit hydraulique 8, dans un sens ou dans l'autre, en passant dans la portion 11a de la conduite de dérivation 11, dans la portion 12a de la conduite de dérivation 12 et dans la conduite de liaison 13 en passant au travers de la machine hydraulique 6, l'eau ne circulant pas dans les portions 11b et 12b des conduites de dérivation 11 et 12.

Dans le cas de la figure 5, l'eau circule dans la canalisation extérieure 3 dans le sens SC1 et dans la machine hydraulique 6 dans le sens S1. En conséquence, la machine hydraulique 6 agit à titre de pompe, entraînée par la machine électrique 4 agissant à titre de moteur électrique. Ce cas est illustré sur la ligne L2 du tableau de la figure 9.

Dans le cas de la figure 6, l'eau circule dans la canalisation extérieure 3 dans le sens SC2 et dans la machine hydraulique 6 dans le sens S2. En conséquence, la machine hydraulique 6 agit à titre de turbine entraînant la machine électrique 4 qui agit à titre de génératrice électrique. Ce cas est illustré sur la ligne L6 du tableau de la figure 9.

Dans les deux cas ci-dessus, la pression P19 délivrée par le capteur 19 est supérieure à la pression P18 délivrée par le capteur 18.

### Etat III.

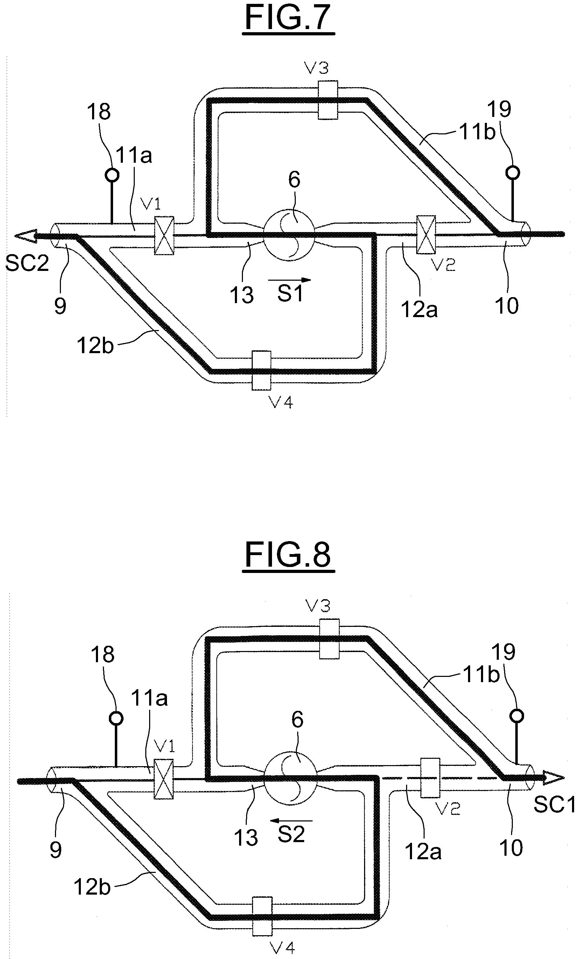

Comme le montrent les figures 7 et 8, lorsque les vannes V1 et V2 sont fermées et que les vannes V3 et V4 sont ouvertes, l'eau pouvant circuler dans un sens ou dans l'autre dans la canalisation extérieure 3, circule au travers du circuit hydraulique 8, dans un sens ou dans l'autre, en passant dans la portion 11b de la conduite de dérivation 11, dans la portion 12b de la conduite de dérivation 12 et dans la conduite de liaison 13 en passant au travers de la machine hydraulique 6, l'eau ne circulant pas dans les portions 11a et 12a des conduites de dérivation 11 et 12.

Dans le cas de la figure 7, l'eau circule dans la canalisation extérieure 3 dans le sens SC2 et dans la machine hydraulique 6 dans le sens S1. En conséquence, la machine hydraulique 6 agit à titre de pompe, entraînée par la machine électrique 4 agissant à titre de moteur électrique. Ce cas est illustré sur la ligne L5 du tableau de la figure 9.

Dans le cas de la figure 8, l'eau circule dans la canalisation extérieure 3 dans le sens SC1 et dans la machine hydraulique 6 dans le sens inverse S2. En conséquence, la machine hydraulique 6 agit à titre de turbine entraînant la machine électrique 4 qui agit à titre de génératrice électrique. Ce cas est illustré sur la ligne L3 du tableau de la figure 9.

Dans les deux cas ci-dessus, la pression P18 délivrée par le capteur 18 est supérieure à la pression P 19 délivrée par le capteur 19.

Dans les cas des figures 6 et 8, dans lesquels la machine hydraulique 6 agit à titre de turbine, il peut être avantageux que les vannes V3 ou V2 ne soient pas complètement fermées mais à ouvertures régulées pour faire passer une certaine quantité d'eau en by-pass.

Les différents modes de fonctionnement, décrits ci-dessus, associés aux différents états des vannes V1, V2, V3 et V4, peuvent être la conséquence d'impératifs d'un réseau hydraulique comprenant la canalisation extérieure 3, liés au sens souhaité de circulation dans cette canalisation et de conditions souhaitées sur les pressions dans l'une ou les portions 14 et 15 de cette canalisation, soit sur la pression P18, soit sur la pression P19, soit sur les deux.

Il résulte de ce qui précède que l'appareil 1 est adapté pour conjuguer harmonieusement le couple débit-pression à tout moment dans une canalisation d'eau, quel que soit le sens de circulation de l'eau dans cette conduite, avec pour objectif, globalement, de moins consommer d'énergie électrique, mais plutôt d'en produire.

L'appareil 1 peut avantageusement constituer un adaptateur débit-pression dans une canalisation d'un réseau hydraulique et un convertisseur Hydroélectrique tels que :
- quand il y a trop de débit et de pression dans la canalisation extérieure 3, l'appareil 1 les réduit en convertissant la force motrice hydraulique en énergie électrique, la machine hydraulique 6 agissant à titre de turbine entraînant la machine électrique 4.
- ou, au contraire, à partir de la force motrice électrique venant de l'extérieur, l'appareil 1 la transforme en énergie hydraulique par l'accroissement du débit et de la pression, la machine hydraulique 6 agissant à titre de pompe, entraînée par la machine électrique 4 agissant à titre de moteur électrique.

Dans le cas où l'appareil 1 est employé pour «casser» exclusivement la pression et limiter le débit, la production électrique devient très importante. L'idée mise en avant à travers cet appareil consiste en premier lieu, à effectuer une régulation complète du débit et de la pression dans une canalisation, puis à récupérer l'énergie perdue à cette occasion.

L'appareil 1 permet aussi d'élever le débit et la pression. On obtient alors une régulation dans tous les sens, de la pression et du débit qui peut-être modifiée selon les circonstances, en fonction d'hypothèses, préalablement étudiées, des caractéristiques du réseau d'eau extérieur.

L'appareil 1 peut avantageusement être installé sur des canalisations 3 quelconques et plus particulièrement sur des canalisations de diamètres pouvant aller jusqu'à 700mm et même au-delà.

D'un point de vue construction, l'appareil 1 peut se présenter sous la forme, d'un ensemble parallélépipédique homogène, comprenant des pièces hydromécaniques électriques et électroniques bien agencées et protégées, montées sur des supports individuels maintenus sur un châssis mécano-soudé.

Plus particulièrement, il est avantageux que le groupe hydraulique 2 se situe en bas, alors que la machine électrique 4 et la partie électrique et électronique sont mises en haut. Cette disposition lui confère une bonne position. En cas d'incident sur l'une ou l'autre des parties, il n'y a pas d'interaction entre l'eau et l'électricité. Comme le montre la figure 1, un châssis général porteur peut être fixé solidement à une structure de génie civil qui l'accueille.

Le choix sélectif d'une machine hydraulique 6 constituée par une pompe centrifuge réversible en turbine résulte des considérations suivantes.

En mode turbinage, pour limiter la pression et le débit, une telle pompe offre, accouplée à la machine électrique 6, des caractéristiques acceptables de puissance mécanique, récupérable sur l'arbre. En appliquant une pression hydrostatique sur le refoulement de ce type de pompe, celle-ci devient une turbine avec un rendement hydraulique correct pouvant éventuellement atteindre 80%.

La divergence au niveau du corps et de la roue est assez petite, la rendant ainsi efficace dans les deux sens.

Le groupe hydraulique 2 peut être optimisé en lui donnant une configuration monobloc, avec une majorité de pièces de fonderie ou mécano-soudées.

Dans un exemple d'application, le choix se portera en particulier, selon les variations souhaitées de pression et de débit, sur une pompe centrifuge à plan de joint, à axe vertical, à une roue et à deux ouies sur la volute. Une telle pompe centrifuge, adaptée, permet des variations très fines de la pression et du débit, dues d'une part aux formes simples mais efficaces de sa roue et de sa volute et d'autre part d'une possibilité de rotation à vitesse variable. Cette vitesse va en diminution par rapport à la vitesse maximale de la machine électrique en pompe jusqu'à environ son tiers, en turbine pour avoir un rendement optimal autour d'environ les deux tiers.

Le circuit hydraulique 8 présente de préférence les caractéristiques suivantes.

Il est constitué d'un ensemble de pièces hydromécaniques disposées de telle façon qu'elles sont toujours opérationnelles quelles que soient les valeurs de pression et de débit à obtenir et le sens de circulation de l'eau. Son architecture répond d'une part à toutes les combinaisons possibles extérieures, et d'autre part à l'intérieur au sens d'admission de l'eau imposé en pompe ou en turbine sur l'aspiration et sur le refoulement.

De préférence, les conduites du circuit hydraulique 8 font corps avec le corps de la machine hydraulique, pour limiter d'une part le nombre de pièces et obtenir un groupe hydraulique compact et d'autre part pour avoir des circuits plus fluides, avec de meilleurs rendements.

Comme le montrent les figures 1 à 8, selon un exemple préféré de réalisation, le circuit hydraulique 8 est réalisé de façon symétrique par rapport au centre de la partie tournante de la machine hydraulique 6.

Un alignement de conduites est constitué par, de part et d'autre de l'espace dans lequel tourne la roue de la machine hydraulique, les parties identiques 11a et 12a des conduites de dérivation 11 et 12, par les conduites opposées d'extrémité identiques 9 et 10.

Les parties 11b et 12 b des conduites de dérivation 11 et 12 sont identiques et symétriques par rapport au centre de la partie tournante de la machine hydraulique 6. Elles présentent des portions identiques 11c et 12c perpendiculaires aux parties 11a et 12a, des portions identiques 11d et 12d parallèles audit alignement des conduites et des portions identiques 11e et 12e inclinées formant des angles obtus identiques avec portions 11d et 12d et des angles aigus identiques avec les portions 12a et 11a.

Le choix sélectif d'une machine électrique 4 constituée par une moteur asynchrone réversible en génératrice asynchrone monophasée ou triphasée, résulte des considérations suivantes.

Une telle machine se compose d'un Stator (partie fixe, carcasse) comprenant des bobinages alimentés par une source électrique alternative, et d'un rotor (partie tournante) comprenant soit un ensemble de bobinages non alimentés, soit plus couramment des barres conductrices en court-circuit, appelées «cages d'écureuil».

Dès que les bobinages du stator sont sous une tension du courant alternatif, ils créent un champ magnétique tournant. Le stator alimente par induction le rotor. Le rotor est le siège de courants induits qui le font tourner à une vitesse presque égale à celle de ce champ magnétique. Cette machine devient générateur lorsque le rotor tourne plus vite que le champ magnétique statorique. En mode moteur, le rotor tourne légèrement moins vite que la vitesse de synchronisme. L'avantage d'une telle machine est qu'elle n'a pas besoin d'avoir un rotor alimenté électriquement. Ce qui simplifie sa conception. Il n'y a pas de collecteurs, donc plus d'entretien à ce niveau. C'est le nombre de paires de pôles du stator qui détermine cette vitesse (n) en tours par minute.

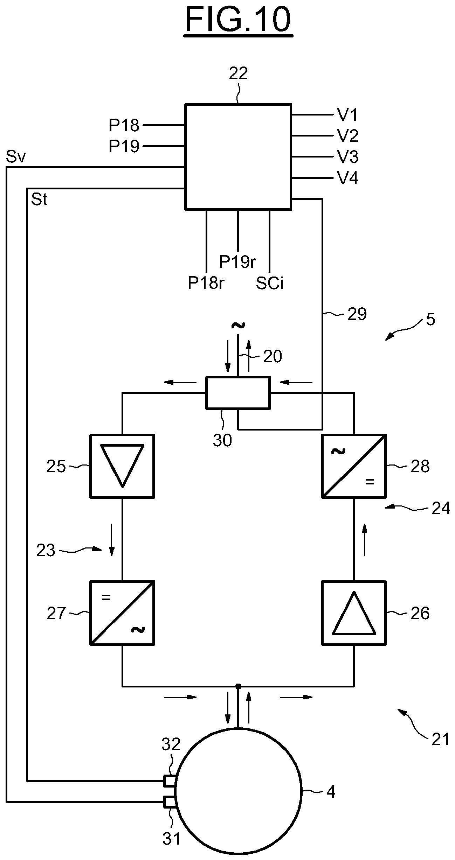

En se reportant à la figure 10, on va maintenant décrire le système électrique et électronique 5.

L'objet de ce système électrique et électronique 5 est de gérer les échanges électriques entre un réseau électrique extérieur alternatif 20 et la machine électrique 4 et de commander sélectivement les vannes motorisées V1, V2, V3 et V4, afin d'assurer une adoption d'un sens de circulation et une adaptation de pression et de débit dans la canalisation extérieure 3 aux nécessités hydrauliques du réseau hydraulique.

Pour l'essentiel, le système électrique et électronique 5 comprend un variateur électronique 21 et un automate programmable 22.

Le variateur électronique 21comprend deux lignes parallèles 23 et 24 qui relient la machine électrique 4 et le réseau électrique extérieur 20 par l'intermédiaire d'un circuit électronique de commutation 30 et qui comprennent respectivement des redresseurs 25 et 26 et des onduleurs 27 et 28, qui sont montés tête-bêche, de façon à constituer une structure connue sous le nom de structure à quatre quadrants. De plus, l'automate 22 est relié à une entrée de commande du commutateur 30 par une ligne 29 pour connecter la machine électrique 4 et le réseau électrique extérieur 20 soit par la ligne 23 soit par la ligne 24.

L'automate programmable 22 est soumis à des signaux extérieurs qui comprennent un signal Sci représentatif d'un sens de circulation souhaité dans la canalisation extérieure 3, soit le sens SC1 soit le sens SC2, et des signaux de consigne P18r et P19r qui sont représentatifs des pressions souhaitées sur les capteurs de pression 18 et 19.

L'automate programmable 22 reçoit les signaux de pression P18 et P19 issus des capteurs 18 et 19, ainsi qu'un signal Sv issu d'un capteur de vitesse de rotation de l'arbre 7 reliant la machine électrique 4 et la machine hydraulique 6 et un signal St issu d'un capteur de couple sur cet arbre.

L'automate programmable 22 est programmé pour délivrer des signaux de commande des vannes motorisées V1, V2, V3 et V4 et du circuit électronique de commutation 30, afin d'établir sélectivement les fonctionnements décrits plus haut pour que le sens de circulation souhaité soit établi et que les pressions P18 et P19 tendent vers les pressions de consigne P18r et P19r souhaitées, l'une, l'autre ou les deux en fonction des cas.

Dans le cas du fonctionnement de la machine hydraulique 6 à titre de pompe de la figure 5, correspondant au sens S1 dans la conduite de liaison 13 et au sens SC1 dans la conduite extérieure 3, l'automate 22, est programmé pour faire fonctionner la machine électrique 4 à titre de moteur électrique, par l'intermédiaire du variateur électrique 21, pour que la pression aval P19 mesurée par le capteur de pression 19 atteigne et soit maintenue à la pression de consigne P 19r.

Dans le cas du fonctionnement de la machine hydraulique 6 à titre de pompe de la figure 7, correspondant au sens S1 dans la conduite de liaison 13 et au sens SC2 dans la conduite extérieure 3, l'automate 22, est programmé pour faire fonctionner la machine électrique 4 à titre de moteur électrique, par l'intermédiaire du variateur électrique 21, pour que la pression aval P18 mesurée par le capteur de pression 18 atteigne et soit maintenue à la pression de consigne P18r.

Dans le cas du fonctionnement de la machine hydraulique 6 à titre de turbine de la figure 6, correspondant au sens S2 dans la conduite de liaison 13 et au sens SC2 dans la conduite extérieure 3, l'automate 22 est programmé pour faire fonctionner la machine électrique 4 à titre de génératrice électrique, par l'intermédiaire du variateur électrique 21, pour que la pression aval P18 mesurée par le capteur de pression 18 atteigne et soit maintenue à la pression de consigne P18r, en contrôlant l'ouverture de la vanne V3 et en tenant compte de la pression amont P19 mesurée.

Dans le cas du fonctionnement de la machine hydraulique 6 à titre de turbine de la figure 8, correspondant au sens S2 dans la conduite de liaison 13 et au sens SC1 dans la conduite extérieure 3, l'automate 22 est programmé pour faire fonctionner la machine électrique 4 à titre de génératrice électrique, par l'intermédiaire du variateur électrique 21, pour que la pression aval P19 mesurée par le capteur de pression 19 atteigne et soit maintenue à la pression de consigne P19r, en contrôlant l'ouverture de la vanne V2 et en tenant compte de la pression amont P18 mesurée.

D'une manière générale, lorsqu'il s'agit de passer d'un état de fonctionnement à un nouvel état de fonctionnement, il est souhaitable que l'automate 22 soit programmé pour, dans un premier temps de transition, placer ou régler les vannes dans leur situation en by-pass des figures 3 ou 4 et, dans un second temps, après un certain délai de stabilisation, placer ou régler, de préférence progressivement, les vannes dans leurs situations correspondant à ce nouvel état de fonctionnement.

La structure du système électronique est liée aux considérations suivantes.

La régulation en pression et débit et la variation de vitesse ont lieu avec le sens de rotation de la machine hydraulique. L'énergie est transmise par l'intermédiaire de l'arbre relié à la machine électrique. Pour contrôler et réguler l'énergie consommée ou produite par le groupe hydroélectrique, on se sert de préférence des deux grandeurs physiques de l'état de l'arbre 7, à savoir son couple et sa vitesse de rotation. Le sens de rotation qui donne l'état en pompe ou en turbine, l'intensité de la vitesse de rotation et du couple, définissent quatre zones caractéristiques de fonctionnement dénommées «quadrants». Deux correspondent aux deux fonctionnements fondamentaux, en pompe (moteur) ou en turbine (générateur). Les deux autres correspondent à des phases transitoires d'accélération ou de décélération du groupe hydroélectrique en pompage ou en turbinage.

Selon que l'appareil 1 est en pompage ou en turbinage, il se produit une transformation de la force motrice électrique venant du réseau électrique extérieur 20 en énergie mécanique, ou une transformation de la force motrice hydraulique vers le réseau électrique extérieur 20 restituée en énergie électrique.

Dans le cas d'un fonctionnement en pompe, l'appareil 1 est alors consommateur d'énergie électrique qu'il prélève sur le réseau électrique extérieur 20.

Grâce au variateur électronique 21, il n'y a pas d'à coups de fonctionnement lors des démarrages ou des arrêts brutaux.

L'automate programmable 22 délivre des instructions au variateur électronique 21, qui agit sur la vitesse de rotation du moteur électrique 4, donc de la pompe 6, pour obtenir le bon débit et la bonne pression dans la conduite extérieure 3. Le variateur électronique 21 permet non seulement de faire varier la vitesse du moteur, mais aussi de le faire démarrer ou l'arrêter doucement. Il réduit fortement, avec des rampes progressives d'accélération ou de décélération les surintensités au démarrage et les coups de bélier, et la consommation électrique.

La vitesse variable sur le moteur asynchrone est réalisée en alimentant les enroulements du stator avec une tension et un courant alternatif à fréquence variable. A l'aide d'une source alternative à fréquence fixe, par exemple 50 hertz du réseau électrique 20, on fabrique une nouvelle source de fréquence variable de quelques hertz à 60 hertz. Le principe de fonctionnement consiste à redresser la tension alternative du réseau électrique 20, puis avec la tension continue obtenue, à alimenter un onduleur qui fournit la tension à une fréquence variable au moteur, donc lui procure une vitesse variable. Le variateur électronique 21 pour moteurs asynchrones, dénommé «convertisseur de fréquence», convertit les tensions du réseau électrique 20 (par exemple de 380v à 600v ou plus entre phases), en un système de tension, de fréquence et d'amplitude variables. La fréquence détermine alors la vitesse du moteur, la tension agissant sur le couple.

Dans l'autre cas, lorsqu'on veut «freiner l'eau» dans une canalisation extérieure 3, pour réduire le débit et la pression, la force motrice hydraulique est transformée en énergie électrique et envoyée sur le réseau électrique 20. La machine électrique asynchrone 4 devient une génératrice asynchrone alternative. L'appareil 1 fonctionne alors en turbinage.

Sur le plan technique, en turbinage, le variateur électronique 21 est apte à fabriquer un courant et une tension stables renvoyés sur le réseau électrique alternatif 20.

La nature de la machine asynchrone à cage d'écureuil, qui ne possède pas de rotor bobiné, oblige à puiser dans le réseau électrique 20 la tension utile à sa magnétisation.

La vitesse de rotation de la génératrice étant variable, la tension à ses bornes en relation avec le réseau électrique 20 est avantageusement traitée, sinon sa fréquence variable la rend incompatible à une production électrique. C'est pourquoi les redresseurs et les onduleurs des lignes 23 et 24 sont positionnés tête-bêche. Le processus est inversé. La tension alternative impulsée par le réseau électrique 20, délivrée par la machine électrique, devenue génératrice, est redressée par le redresseur 26, puis elle passe dans l'onduleur 28 qui fournit en retour une production électrique alternative, par exemple de fréquence 50 HZ, sur le réseau électrique 20.

Sur le schéma de la figure 10, on peut noter que la ligne 23 est destinée au fonctionnement en moteur et la ligne 24 est destinée au fonctionnement en génératrice, avec une logique interne de commutation optimisée à partir des valeurs des commandes générales passant par l'automate programmable et la ligne 29.

Ayant préalablement établi les courbes hydrauliques des pressions en fonction des débits dans les deux parties 14 et 15 de la canalisation extérieure 3, de part et d'autre de l'appareil 1, et ayant mémorisé ces courbes dans l'automate 22, la mesure des pressions par les capteurs de pression 18 et 19 est suffisante pour faire fonctionner l'appareil 1 en fonction du programme mémorisé.

Les vannes peuvent en outre présenter des indicateurs confirmant leur positionnement. L'automate 22 peut être adapté pour effectuer des accélérations ou décélérations contrôlées. Le variateur électronique 21 permet de maintenir à tout instant un rendement optimisé résultant du montage en quadrants, qui rend le groupe performant et réversible.

Selon une variante de réalisation, on pourrait prévoir plusieurs conduites de liaison 13 en parallèle sur lesquelles seraient respectivement installées des machines hydrauliques reliées à plusieurs machines électriques. Selon une autre variante, on pourrait prévoir sur la conduite de liaison 13 plusieurs machines hydrauliques en série reliées à plusieurs machines électriques ou à une machine électrique par une transmission.

## Revendications

1. Appareil hydroélectrique réversible pouvant s'installer sur une canalisation extérieure, **caractérisé par le fait qu'**il comprend :
- un groupe hydraulique (2) comprenant une machine hydraulique (6) constituée par une pompe centrifuge réversible en turbine et un circuit hydraulique (8) présentant des conduites de dérivation et/ou de liaison (11, 12, 13) et des vannes motorisées (V1, V2, V3 et V4) permettant une circulation de l'eau dans ladite machine hydraulique dans un sens ou dans l'autre quel que soit le sens de circulation de l'eau dans ladite canalisation extérieure ;
- une machine électrique (4) accouplée à ladite machine hydraulique (6) et constituée par un moteur asynchrone réversible en génératrice asynchrone ;
- et un système électronique (5) comprenant un automate (22) de réglage et/ou de régulation desdites vannes et un variateur électronique (21) de réglage et/ou de régulation de la vitesse de rotation de ladite machine électrique pour que la pression et/ou le débit en aval de la machine hydraulique en fonction du sens de circulation soient stabilisés ou ajustés à au moins une valeur de consigne.

2. Appareil selon la revendication 1, dans lequel ledit circuit hydraulique (8) est symétrique par rapport à la machine hydraulique.

3. Appareil selon l'une des revendications précédentes, dans lequel le corps de ladite machine hydraulique (6) comprend des conduites symétriques.

4. Appareil selon l'une quelconque des revendications précédentes, dans lequel le système électronique (5) comprend un variateur électronique quatre quadrants (21) montés entre un réseau électrique (20) et ladite machine électrique (4) et assurant, en fonctionnement en moteur asynchrone, le réglage et/ou la régulation de la vitesse de rotation de ladite machine électrique, et, en fonctionnement en génératrice asynchrone, une adaptation électrique au réseau électrique (20).

5. Appareil selon la revendication 4, dans lequel le variateur électronique (21) comprend deux lignes en parallèles (23, 24) comprenant respectivement un redresseur (25, 26) et un onduleur (27, 28), montés tête-bêche, et un commutateur (30) adapté pour relier la machine électrique (4) et le réseau électrique (20) soit par l'une desdites lignes soit par l'autre.

6. Appareil selon l'une quelconque des revendications précédentes, dans lequel le système électronique comprend des capteurs de pression et/ou de débit placés de part et d'autre de la machine hydraulique et reliés audit automate.

7. Appareil selon l'une quelconque des revendications précédentes, dans lequel le système électronique comprend des capteurs du sens et/ou de la vitesse de rotation et/ou du couple du la machine hydraulique reliés à audit automate,

8. Appareil selon l'une quelconque des revendications précédentes, dans lequel le système électronique comprend des capteurs de la tension et/ou du courant et/ou de la fréquence et/ou thermiques de la machine électrique.

9. Appareil selon l'une quelconque des revendications précédentes, dans lequel le circuit hydraulique comprend deux conduites de dérivation en parallèle (11, 12) insérées entre deux parties de ladite canalisation extérieure (3) et au moins une conduite de liaison (13) dont les extrémités sont reliées auxdites conduites de dérivation, que ladite machine hydraulique est installée sur cette conduite de liaison et qu'il comprend quatre vannes motorisées (V1, V2, V3 et V4) installées respectivement sur les parties desdites conduites de dérivation formées de part et d'autre des extrémités de ladite conduite de liaison (13).

10. Appareil selon la revendication 9, comprenant plusieurs conduites de liaison en parallèles sur lesquelles sont respectivement installées des machines hydrauliques reliées à plusieurs machines électriques ou, sur la conduite de liaison 13, plusieurs machines hydrauliques en série reliées à plusieurs machines électriques ou à une machine électrique par une transmission.

## Patentansprüche

1. Reversible hydroelektrische Vorrichtung, die in einer äußeren Rohrleitung installiert sein kann, **gekennzeichnet durch**:
- eine Hydraulikgruppe (2), die eine Hydraulikmaschine (6), die **durch** eine als Turbine betriebene reversible Zentrifugenpumpe gebildet ist, und einen Hydraulikkreis (8), der Zweig- und/oder Verbindungsleitungen (11, 12, 13) und motorisierte Ventile (V1, V2, V3 und V4) aufweist, die eine Umwälzung von Wasser in der Hydraulikmaschine in dem einen oder dem anderen Richtungssinn unabhängig von der Umwälzrichtung des Wassers in der äußeren Rohrleitung ermöglichen, enthält;
- eine elektrische Maschine (4), die mit der Hydraulikmaschine (6) gekoppelt ist und **durch** einen als asynchroner Generator betriebener reversibler Asynchronmotor gebildet ist;
- und ein elektronisches System (5), das einen Automaten (22) zum Regeln und/oder Regulieren der Ventile und einen elektronischen Variator (21) zum Regeln und/oder Regulieren der Drehzahl der elektrischen Maschine umfasst, damit der Druck und/oder der Durchfluss stromabseitig der Hydraulikmaschine als Funktion der Umwälzrichtung auf wenigstens einen Sollwert stabilisiert oder eingestellt werden.

2. Vorrichtung nach Anspruch 1, wobei der Hydraulikkreis (8) in Bezug auf die Hydraulikmaschine symmetrisch ist.

3. Vorrichtung nach einem der vorhergehenden Ansprüche, wobei der Körper der Hydraulikmaschine (6) symmetrische Leitungen umfasst.

4. Vorrichtung nach einem der vorhergehenden Ansprüche, wobei das elektronische System (5) einen elektronischen Variator (21) mit vier Quadranten umfasst, die zwischen einem elektrischen Netz (20) und der elektrischen Maschine (4) montiert sind und in der Funktionsweise als Asynchronmotor die Regelung und/oder Regulierung der Drehzahl der elektrischen Maschine und in der Funktionsweise als asynchroner Generator eine elektrische Anpassung an das elektrische Netz (20) gewährleisten.

5. Vorrichtung nach Anspruch 4, wobei der elektronische Variator (21) zwei parallele Leitungen (23, 24) umfasst, die jeweils einen Gleichrichter (25, 26) und einen Wechselrichter (27, 28), die zueinander entgegengesetzt geschaltet sind, enthalten, und einen Kommutator (30), der dafür ausgelegt ist, die elektrische Maschine (4) und das elektrische Netz (20) entweder über die eine der Leitungen oder über die andere zu verbinden, umfasst.

6. Vorrichtung nach einem der vorhergehenden Ansprüche, wobei das elektronische System Druck- und/oder Durchflusssensoren umfasst, die beiderseits der hydraulischen Maschine angeordnet und mit dem Automaten verbunden sind.

7. Vorrichtung nach einem der vorhergehenden Ansprüche, wobei das elektronische System Sensoren für die Richtung und/oder die Drehzahl und/oder das Drehmoment der Hydraulikmaschine, die mit dem Automaten verbunden sind, umfasst.

8. Vorrichtung nach einem der vorhergehenden Ansprüche, wobei das elektronische System Sensoren für die Spannung und/oder den Strom und/oder die Frequenz und/oder die Thermik der elektrischen Maschine umfasst.

9. Vorrichtung nach einem der vorhergehenden Ansprüche, wobei der Hydraulikkreis zwei parallele Zweigleitungen (11, 12), die zwischen zwei Teile der äußeren Rohrleitung (3) eingefügt sind, und wenigstens eine Verbindungsleitung (13), deren Enden mit den Zweigleitungen verbunden sind, umfasst, dass die Hydraulikmaschine in dieser Verbindungsleitung installiert ist und dass sie vier motorisierte Ventile (V1, V2, V3 und V4) umfasst, die in den jeweiligen Teilen der Zweigleitungen installiert sind, die beiderseits der Enden der Verbindungsleitung (13) gebildet sind.

10. Vorrichtung nach Anspruch 9, die mehrere parallele Verbindungsleitungen umfasst, in denen Hydraulikmaschinen, die mit mehreren elektrischen Maschinen verbunden sind, bzw. in der Verbindungsleitung (13) mehrere Hydraulikmaschinen, die in Reihe mit mehreren elektrischen Maschinen oder mit einer elektrischen Maschine für eine Übertragung verbunden sind, installiert sind.

## Claims

1. A reversible hydroelectric device that can be installed on an outside pipe, **characterized in that** it comprises:
- a hydraulic power unit (2) comprising a hydraulic machine (6) consisting of a centrifugal pump that can be reversed as a turbine and a hydraulic circuit (8) having branching and/or connecting ducts (11, 12, 13) and motorized valves (V1, V2, V3 and V4) allowing water circulation in said hydraulic machine in one direction or the other irrespective of the direction of circulation of the water in said outside pipe;
- an electric machine (4) coupled to said hydraulic machine (6) and consisting of an asynchronous motor that can be reversed as an asynchronous generator;
- and an electronic system (5) comprising a programmable controller (22) for adjusting and/or regulating said valves and an electronic variator (21) for adjusting and/or regulating the rotation speed of said electric machine so that the pressure and/or the flow rate downstream of the hydraulic machine according to the direction of circulation is/are stabilized or adjusted to at least one set point value.

2. The device as claimed in claim 1, wherein said hydraulic circuit (8) is symmetrical relative to the hydraulic machine.

3. The device as claimed in one of the preceding claims, wherein the body of said hydraulic machine (6) comprises symmetrical ducts.

4. The device as claimed in any one of the preceding claims, wherein the electronic system (5) comprises a four-quadrant electronic variator (21) mounted between an electricity mains supply (20) and said electric machine (4) and providing, in operation as an asynchronous motor, the adjustment and/or regulation of the rotation speed of said electric machine and, in operation as an asynchronous generator, an electrical adaptation to the electricity mains supply (20).

5. The device as claimed in claim 4, wherein the electronic variator (21) comprises two lines in parallel (23, 24) comprising respectively a rectifier (25, 26) and an inverter (27, 28), mounted head-to-toe, and a switch (30) designed to connect the electric machine (4) and the electricity mains supply (20) by either one of said lines or by the other.

6. The device as claimed in any one of the preceding claims, wherein the electronic system comprises pressure and/or flow-rate sensors placed on either side of the hydraulic machine and connected to said programmable controller.

7. The device as claimed in any one of the preceding claims, wherein the electronic system comprises sensors sensing the direction and/or rotation speed and/or torque of the hydraulic machine connected to said programmable controller.

8. The device as claimed in any one of the preceding claims, wherein the electronic system comprises sensors sensing the voltage and/or current and/or frequency and/or thermal properties of the electric machine.

9. The device as claimed in any one of the preceding claims, wherein the hydraulic circuit comprises two parallel branching ducts (11, 12) inserted between two portions of said outside pipe (3) and at least one connecting duct (13) the ends of which are connected to said branching ducts, that said hydraulic machine is installed on this connecting duct and that it comprises four motorized valves (V1, V2, V3 and V4) installed respectively on the portions of said branching ducts formed on either side of the ends of said connecting duct (13).

10. The device as claimed in claim 9, comprising several parallel connecting ducts on which are respectively installed hydraulic machines connected to several electric machines or, on the connecting duct 13, several - hydraulic machines in series connected to several electric machines or to an electric machine via a transmission.
